# FASCICULE DE BREVET EUROPEEN

(11) **EP 3 683 429 B1**
(45) Date de publication et mention de la délivrance du brevet: **27.10.2021**
(21) Numéro de dépôt: 20150902.3
(22) Date de dépôt: 09.01.2020
(51) Int. Cl.: F02K 1/82

(54) **STRUCTURE INTERNE D'UN CONDUIT D'EJECTION PRIMAIRE**
INNENSTRUKTUR EINES PRIMÄREN AUSSTOSSROHRS
INTERNAL STRUCTURE OF A PRIMARY EJECTION CONDUIT

(30) Priorité: 17.01.2019 FR 1900412
(43) Date de publication de la demande: 22.07.2020
(73) Titulaire: AIRBUS OPERATIONS (S.A.S.), 31060 Toulouse (FR)
(72) Inventeur: TROCELLIER, Vincent, 31060 TOULOUSE Cedex 9 (FR); ANDRE, Sandrine, 31060 TOULOUSE Cedex 9 (FR); KILKENNY, Michael, 31060 TOULOUSE Cedex 9 (FR); FERREIRA, Julien, 31060 TOULOUSE Cedex 9 (FR)
(74) Mandataire: Gicquel, Olivier Yves Gérard

(56) Documents cités:
- EP-A2- 1 391 597
- FR-A1- 2 916 018
- FR-A1- 2 987 079
- US-A1- 2007 256 889

## Description

La présente invention concerne une structure interne d'un conduit d'éjection primaire d'une turbomachine, une turbomachine comportant une telle structure interne, un aéronef comportant au moins une telle turbomachine, ainsi qu'un procédé d'assemblage d'une telle structure interne.

Une turbomachine comporte classiquement, de l'amont vers l'aval, une entrée d'air par laquelle l'air entre dans la turbomachine, un moteur qui assure la combustion de l'air et du carburant, et un conduit d'éjection par lequel sont évacués les gaz brûlés.

Une telle turbomachine génère des bruits lors de son fonctionnement.

Pour atténuer une partie des bruits, la turbomachine est entourée d'une nacelle comportant des moyens atténuateurs de bruit, comme par exemple des structures en nid d'abeilles.

Les sons de basses fréquences (entre 300 Hz et 1000 Hz), notamment ceux liés à la combustion, émis par la turbomachine durant le décollage ou l'atterrissage forment une importante source de bruit pour l'environnement et pour atténuer ces bruits, il est connu de disposer des dispositifs atténuateurs de sons basses fréquences dans la structure du conduit d'éjection primaire (appelée « plug » en Anglais).

Le conduit d'éjection primaire est situé dans le prolongement du moteur et avant le cône de tuyère et sa paroi primaire extérieure est en contact avec le flux de gaz brûlé en provenance du moteur.

Un tel dispositif est efficace, cependant il est nécessaire de trouver de nouveaux modes de réalisation.

Il existe un besoin de proposer une structure interne d'un conduit d'éjection primaire d'une turbomachine qui comporte des dispositifs d'atténuation des bruits de basses fréquences qui soit simple et facile à mettre en œuvre. Les documents FR2987079 et US2007256889 décrivent des structures internes répondant à ce besoin.

La présente invention propose une alternative aux structures internes des deux documents susmentionnés, qui décrivent le préambule de la revendication 1.

A cet effet, il est proposée une structure interne d'un conduit d'éjection primaire tel que revendiqué à la revendication 1 et un procédé d'assemblage d'une structure interne selon la revendication 6.

La fixation particulière de la paroi intérieure facilite la construction de ladite structure interne et l'atténuation des fréquences choisies.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef selon l'invention,
La figure 2 est une vue en perspective d'un conduit d'éjection primaire,
La figure 3 est une vue en perspective d'une structure interne d'un conduit d'éjection primaire selon l'invention,
La figure 4 est une vue de côté et en coupe par un plan axial de la structure interne de la figure 3,
La figure 5 est une vue en perspective d'un exemple d'un séparateur mis en œuvre dans la structure interne selon l'invention, et
La figure 6 est une vue de face de la structure interne selon l'invention lors d'une étape de son assemblage.

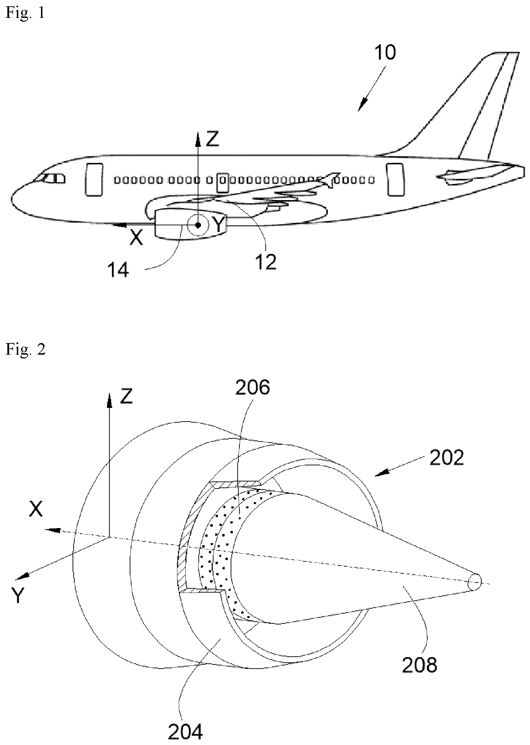

La figure 1 montre un aéronef 10 qui comporte une aile 12 sous laquelle est fixée une nacelle 14 dans laquelle est logée une turbomachine.

Dans la description qui suit, et par convention, on appelle X l'axe longitudinal de la turbomachine, orienté positivement dans le sens d'avancement de l'aéronef 10 et qui est également l'axe longitudinal de la nacelle 14, on appelle Y l'axe transversal qui est horizontal lorsque l'aéronef 10 est au sol, et Z l'axe vertical ou hauteur verticale lorsque l'aéronef 10 est au sol, ces trois directions X, Y et Z étant orthogonales entre elles.

Dans la description qui suit, les termes relatifs à une position sont pris en référence au sens de déplacement des gaz dans la turbomachine c'est-à-dire de l'avant vers l'arrière de l'aéronef 10.

La figure 2 montre la partie arrière de la turbomachine qui forme un conduit d'éjection primaire 202 par lequel s'échappent les gaz brûlés par la turbomachine et qui est délimité à l'extérieur par une tuyère primaire 204 et à l'intérieur par une structure interne 206 du conduit d'éjection primaire 202.

Le conduit d'éjection primaire 202 comme sa structure interne 206 ont une forme générale consistant en des surfaces de révolution autour de l'axe longitudinal X de la turbomachine.

A l'arrière de la structure interne 206 est fixé un cône de tuyère 208.

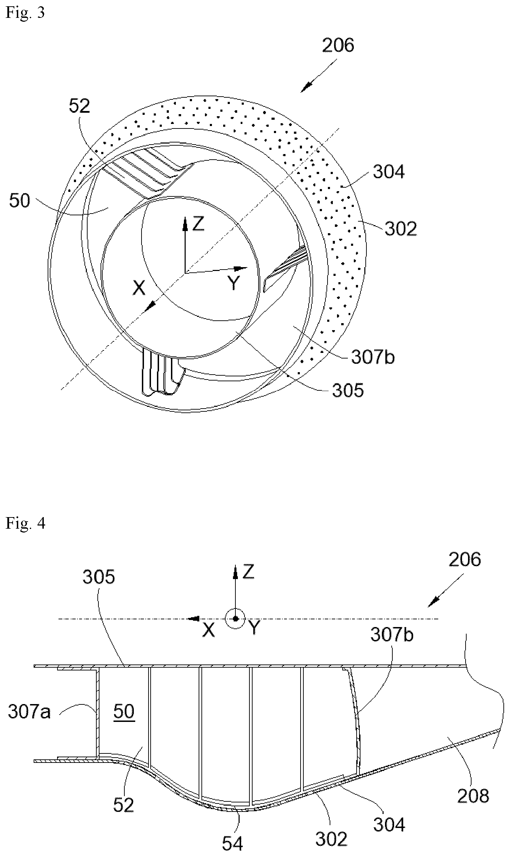

La figure 3 montre une vue de devant et en perspective de la structure interne 206, et la figure 4 est une vue de côté et en coupe de la structure interne 206 et du cône 208.

La structure interne 206 comporte une paroi primaire 302 percée de trous 304 répartis sur la surface de la paroi primaire 302. La paroi primaire 302 forme la surface extérieure de la structure interne 206, c'est-à-dire celle qui forme la surface interne du conduit d'éjection primaire 202.

La structure interne 206 comporte une peau intérieure 305. La paroi primaire 302 et la peau intérieure 305 consistent chacune en une surface de révolution autour de l'axe longitudinal X qui est, dans cet exemple, globalement cylindrique et la peau intérieure 305 est agencée à l'intérieur de la paroi primaire 302 de manière à constituer un ensemble de deux surfaces coaxiales.

La fixation de la peau intérieure 305 à la paroi primaire 302 est assurée par un flasque amont 307a et un flasque aval 307b fixés entre la paroi primaire 302 et la peau intérieure 305. Le flasque amont 307a n'est pas représenté sur la figure 3 pour permettre de visualiser l'intérieur de la structure interne 206. La fixation de chaque flasque 307a-b est réalisée par tous moyens appropriés comme par exemple par vis, soudure, etc.

Le volume 50 entre la paroi intérieure 305 et la paroi primaire 302 forme un caisson constituant un résonateur de Helmholtz.

Afin de diviser le volume 50 en plusieurs sous-volumes, la structure interne 206 comporte au moins un séparateur 52 fixé à la peau intérieure 305 et qui s'étend de la peau intérieure 305 vers la paroi primaire 302. Le ou chaque séparateur 52 s'étend dans un plan globalement parallèle à l'axe longitudinal X, entre les deux flasques 307a-b.

Le séparateur 52 n'est pas fixé à la paroi primaire 302 afin de ne pas contraindre l'assemblage en cas de déformation de la structure interne 206.

La fixation de chaque séparateur 52 à la peau intérieure 305 s'effectue par tous moyens appropriés comme des boulons, des points de soudure, etc.

Selon un mode de réalisation particulier, afin d'éviter le contact entre le séparateur 52 et la paroi primaire 302, la longueur du séparateur 52 est réduite par rapport à la distance entre la paroi primaire 302 et la peau intérieure 305. L'écart 54 entre l'extrémité libre de chaque languette 506 et la paroi primaire 302 est par exemple de l'ordre de 2 mm.

Selon un autre mode de réalisation particulier, l'extrémité libre de chaque séparateur 52 est en contact contre la paroi primaire 302, c'est-à-dire sans jeu. Ce mode de réalisation permet de rendre étanche chaque cavité et de limiter les vibrations des séparateurs 52.

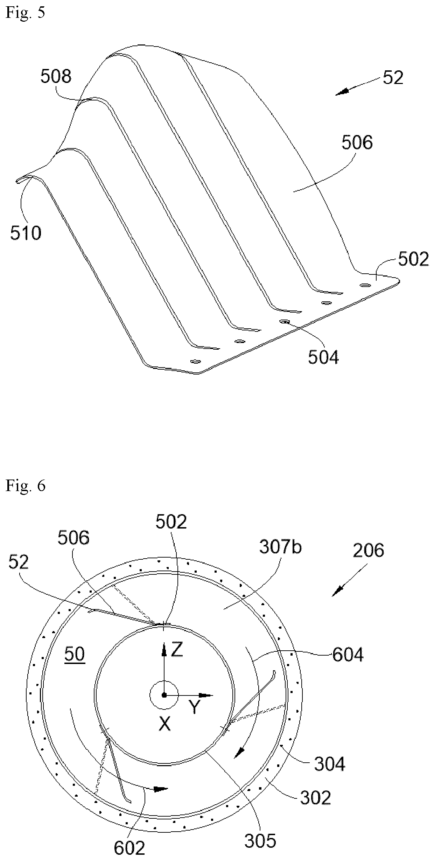

La figure 5 montre un exemple d'un mode de réalisation d'un séparateur 52. Le séparateur 52 comporte une base 502 qui se fixe à la peau intérieure 305. Dans le mode de réalisation présenté, la base 502 présente des alésages 504 pour permettre une fixation par boulons.

Le séparateur 52 comporte au moins une languette 506 solidaire de la base 502 et qui s'étend à travers le volume 50 entre la peau intérieure 305 et la paroi primaire 302.

Le séparateur 52 est préférentiellement réalisé dans un matériau flexible pour permettre une articulation à la jonction entre la base 502 et chaque languette 506, comme par exemple dans une plaque métallique de faible épaisseur.

La flexibilité de chaque languette 506 permet une adaptation en cas de déformation de la structure interne 206, en particulier en cas d'extension thermique de la peau intérieure 305. La flexibilité permet également un assemblage particulier décrit ci-dessous.

L'utilisation de plusieurs languettes 506 permet d'adapter facilement la forme du séparateur 52 à la forme de la paroi primaire 302.

Afin de limiter l'usure que pourrait engendrer le bord libre sur la paroi primaire 302 ou le séparateur 52, l'extrémité libre de chaque languette 506 présente une courbure 510. Il est également possible de remplacer ou compléter cette courbure 510 par un revêtement glissant (Téflon®) ou un patin d'usure.

Lorsqu'il y a au moins deux languettes 506 consécutives, elles sont séparées l'une de l'autre par une fente 508. Selon les besoins, il est possible d'obturer ces fentes 508, en superposant un obturateur qui comporte un socle qui se fixe à la base 502 et des languettes qui sont solidaires du socle, qui sont décalées parallèlement à l'axe longitudinal X par rapport aux languettes 506 du séparateur 52 et qui se plaquent contre les languettes 506 du séparateur 52.

L'obturateur présente également une souplesse entre le socle et les languettes.

Selon un mode de réalisation particulier, l'obturateur est un système identique au séparateur 52 décrit ci-dessus mais dont les languettes 506 sont décalées par rapport aux languettes 506 du séparateur 52 auquel il se fixe.

La figure 6 montre une étape d'assemblage de la structure interne 206 lorsque les séparateurs 52 et les éventuels obturateurs sont flexibles.

Un exemple d'un procédé d'assemblage consiste en :
- une première étape de fourniture au cours de laquelle la paroi primaire 302 est fournie,
- une deuxième étape de fourniture au cours de laquelle le flasque aval 307b est fourni,
- une première étape de fixation au cours de laquelle le flasque aval 307b est fixé à la paroi primaire 302,
- une troisième étape de fourniture au cours de laquelle la peau intérieure 305 est fournie,
- une quatrième étape de fourniture au cours de laquelle au moins un séparateur 52 est fourni,
- pour chaque séparateur 52, une deuxième étape de fixation au cours de laquelle chaque séparateur 52 est fixé à la peau intérieure 305,
- une étape de mise en contrainte au cours de laquelle chaque languette 506 de chaque séparateur 52 est élastiquement déformée de manière à ce que la distance entre le centre de peau intérieure 305 et l'extrémité libre de chaque languette 506 soit inférieure au rayon de la paroi primaire 302,
- une étape d'introduction au cours de laquelle la peau intérieure 305 et les languettes 506 déformées sont introduites dans la paroi primaire 302,
- une étape de relâchement au cours de laquelle chaque languette 506 est relâchée pour retrouver sa forme originelle et de manière à ce que l'extrémité libre de chaque languette 506 se positionne au voisinage de la paroi primaire 302,
- une troisième étape de fixation au cours de laquelle la peau intérieure 305 est fixée au flasque aval 307b,
- une cinquième étape de fourniture au cours de laquelle le flasque amont 307a est fourni, et
- une quatrième étape de fixation au cours de laquelle le flasque amont 307a est fixé à la paroi primaire 302 et à la peau intérieure 305.

La figure 6 montre l'étape de mise en contrainte au cours de laquelle chaque languette 506 est élastiquement déformée, pour diminuer son encombrement autour de la peau intérieure 305. La mise en contrainte consiste à aplatir chaque languette 506 (flèche 602). Ainsi, il est possible d'introduire la peau intérieure 305 et les séparateurs 52 à travers un diamètre de la paroi primaire 302 qui est plus petit que le diamètre des séparateurs 52 non contraints.

Au cours de l'étape de relâchement, chaque languette 506 se redresse (flèche 604), et les traits mixtes matérialisent les languettes 506 qui sont redressées à l'intérieur de la paroi primaire 302.

Lorsqu'ils sont présents, les obturateurs sont fournis et fixés entre la deuxième étape de fixation et l'étape de mise en contrainte.

Bien que la peau intérieure 305 soit décrite comme étant constituée d'un seul tenant, il est possible de la réaliser par fixation de plusieurs panneaux qui pourraient être démontables pour faciliter l'inspection.

## Revendications

1. Structure interne (206) d'un conduit d'éjection primaire (202) d'une turbomachine, ladite structure interne (206) comportant :
- une paroi primaire (302) consistant en une surface de révolution autour d'un axe longitudinal X, laissant passer l'air à travers des orifices (304) et formant une surface interne du conduit d'éjection primaire (202),
- une peau intérieure (305) consistant en une surface de révolution autour de l'axe longitudinal X, agencée à l'intérieur de la paroi primaire (302),
- un flasque amont (307a) et un flasque aval (307b) qui fixent la peau intérieure (305) à l'intérieur de la paroi primaire (302),
- au moins un séparateur (52) fixé à la peau intérieure (305) et qui s'étend de la peau intérieure (305) vers la paroi primaire (302), le ou chaque séparateur (52) s'étend dans un plan globalement parallèle à l'axe longitudinal X, entre les deux flasques (307a-b), et le ou chaque séparateur (52) n'est pas fixé à la paroi primaire (302),
la structure interne (206) étant **caractérisée en ce que** le ou chaque séparateur (52) comporte une base (502) fixée à la peau intérieure (305), et au moins une languette (506) solidaire de la base (502) et qui s'étend entre la peau intérieure (305) et la paroi primaire (302), et **en ce que** le ou chaque séparateur (52) est réalisé dans un matériau flexible pour permettre une articulation à la jonction entre la base (502) et la ou chaque languette (506).

2. Structure interne (206) selon la revendication 1, **caractérisée en ce que** la longueur du ou de chaque séparateur (52) est réduite par rapport à la distance entre la paroi primaire (302) et la peau intérieure (305).

3. Structure interne (206) selon la revendication 1, **caractérisée en ce que** l'extrémité libre de chaque séparateur (52) est en contact contre la paroi primaire (302).

4. Structure interne (206) selon l'une des revendications 1 à 3, **caractérisée en ce qu'**il y a au moins deux languettes (506), **en ce que** deux languettes (506) consécutives sont séparées l'une de l'autre par une fente (508), et **en ce que** la structure interne (206) comporte un obturateur qui comporte un socle qui se fixe à la base (502) et des languettes solidaires du socle et décalées parallèlement à l'axe longitudinal X par rapport aux languettes (506) du séparateur (52) et qui se plaquent contre les languettes (506) du séparateur (52).

5. Structure interne (206) selon l'une des revendications 1 à 4, **caractérisée en ce que** l'extrémité libre de chaque languette (506) présente une courbure (510).

6. Procédé d'assemblage d'une structure interne (206) selon la revendication 1, où ledit procédé d'assemblage consiste en :
- une première étape de fourniture au cours de laquelle la paroi primaire (302) est fournie,
- une deuxième étape de fourniture au cours de laquelle le flasque aval (307b) est fourni,
- une première étape de fixation au cours de laquelle le flasque aval (307b) est fixé à la paroi primaire (302),
- une troisième étape de fourniture au cours de laquelle la peau intérieure (305) est fournie,
- une quatrième étape de fourniture au cours de laquelle au moins un séparateur (52) est fourni,
- pour chaque séparateur (52), une deuxième étape de fixation au cours de laquelle chaque séparateur (52) est fixé à la peau intérieure (305),
- une étape de mise en contrainte au cours de laquelle chaque languette (506) de chaque séparateur (52) est élastiquement déformée de manière à ce que la distance entre le centre de peau intérieure (305) et l'extrémité libre de chaque languette (506) soit inférieure au rayon de la paroi primaire (302),
- une étape d'introduction au cours de laquelle la peau intérieure (305) et les languettes (506) déformées sont introduites dans la paroi primaire (302),
- une étape de relâchement au cours de laquelle chaque languette (506) est relâchée pour retrouver sa forme originelle et de manière à ce que l'extrémité libre de chaque languette (506) se positionne au voisinage de la paroi primaire (302),
- une troisième étape de fixation au cours de laquelle la peau intérieure (305) est fixée au flasque aval (307b),
- une cinquième étape de fourniture au cours de laquelle le flasque amont (307a) est fourni, et
- une quatrième étape de fixation au cours de laquelle le flasque amont (307a) est fixé à la paroi primaire (302) et à la peau intérieure (305).

7. Turbomachine comportant un conduit d'éjection primaire (202) délimité à l'extérieur par une tuyère primaire (204) et à l'intérieur par une structure interne (206) selon l'une des revendications 1 à 5.

8. Aéronef (10) comportant au moins une turbomachine selon la revendication précédente.

## Patentansprüche

1. Innenstruktur (206) eines primären Ausstoßrohrs (202) eines Turbotriebwerks, wobei die Innenstruktur (206) aufweist:
- eine Primärwand (302), die aus einer Rotationsfläche um eine Längsachse X herum besteht, welche die Luft durch Öffnungen (304) hindurch strömen lässt und eine Innenfläche des primären Ausstoßrohrs (202) bildet,
- eine Innenhaut (305), die aus einer Rotationsfläche um die Längsachse X besteht und die im Innern der Primärwand (302) angeordnet ist,
- einen stromaufwärtigen Flansch (307a) und einen stromabwärtigen Flansch (307b), welche die Innenhaut (305) im Inneren der Primärwand (302) befestigen,
- mindestens einen Separator (52), der an der Innenhaut (305) befestigt ist und der sich von der Innenhaut (305) zur Primärwand (302) hin erstreckt, wobei sich der oder jeder Separator (52) in einer im Wesentlichen parallel zur Längsachse X verlaufenden Ebene zwischen den beiden Flanschen (307a-b) erstreckt und der oder jeder Separator (52) nicht an der Primärwand (302) befestigt ist,
wobei die Innenstruktur (206) **dadurch gekennzeichnet ist, dass** der oder jeder Separator (52) eine Basis (502) aufweist, die an der Innenhaut (305) befestigt ist, und mindestens eine Zunge (506), die einstückig mit der Basis (502) ist und die sich zwischen der Innenhaut (305) und der Primärwand (302) erstreckt, und dadurch, dass der oder jeder Separator (52) aus einem flexiblen Material ausgeführt ist, um eine Schwenkbarkeit an der Verbindungsstelle zwischen der Basis (502) und der oder jeder Zunge (506) zu ermöglichen.

2. Innenstruktur (206) nach Anspruch 1, **dadurch gekennzeichnet, dass** die Länge des oder jedes Separators (52) in Bezug auf den Abstand zwischen der Primärwand (302) und der Innenhaut (305) verkürzt ist.

3. Innenstruktur (206) nach Anspruch 1, **dadurch gekennzeichnet, dass** das freie Ende jedes Separators (52) an der Primärwand (302) anliegt.

4. Innenstruktur (206) nach einem der Ansprüche 1 bis 3, **dadurch gekennzeichnet, dass** es mindestens zwei Zungen (506) gibt, dass die beiden aufeinander folgenden Zungen (506) voneinander durch einen Spalt (508) getrennt sind und dass die Innenstruktur (206) ein Verschlusselement aufweist, das einen Sockel aufweist, der an der Basis (502) befestigt wird, und Zungen, die mit dem Sockel einstückig sind und parallel zur Längsachse X in Bezug auf die Zungen (506) des Separators (52) versetzt sind und die gegen die Zungen (506) des Separators (52) gepresst werden.

5. Innenstruktur (206) nach einem der Ansprüche 1 bis 4, **dadurch gekennzeichnet, dass** das freie Ende jeder Zunge (506) eine Krümmung (510) aufweist.

6. Verfahren zur Montage einer Innenstruktur (206) nach Anspruch 1, wobei das Montageverfahren besteht in:
- einem ersten Bereitstellungsschritt, in dessen Verlauf die Primärwand (302) bereitgestellt wird,
- einem zweiten Bereitstellungsschritt, in dessen Verlauf der stromabwärtige Flansch (307b) bereitgestellt wird,
- einem ersten Befestigungsschritt, in dessen Verlauf der stromabwärtige Flansch (307b) an der Primärwand (302) befestigt wird,
- einem dritten Bereitstellungsschritt, in dessen Verlauf die Innenhaut (305) bereitgestellt wird,
- einem vierten Bereitstellungsschritt, in dessen Verlauf mindestens ein Separator (52) bereitgestellt wird,
- für jeden Separator (52), einem zweiten Befestigungsschritt, in dessen Verlauf jeder Separator (52) an der Innenhaut (305) befestigt wird,
- einem Schritt des Spannens, in dessen Verlauf jede Zunge (506) jedes Separators (52) elastisch so verformt wird, dass der Abstand zwischen dem Mittelpunkt der Innenhaut (305) und dem freien Ende jeder Zunge (506) geringer als der Radius der Primärwand (302) ist,
- einem Einführschritt, in dessen Verlauf die Innenhaut (305) und die verformten Zungen (506) in die Primärwand (302) eingeführt werden,
- einem Freigabeschritt, in dessen Verlauf jede Zunge (506) freigegeben wird, um wieder ihre ursprüngliche Form anzunehmen, und so, dass sich das freie Ende jeder Zunge (506) in der Nähe der Primärwand (302) positioniert,
- einem dritten Befestigungsschritt, in dessen Verlauf die Innenhaut (305) an dem stromabwärtigen Flansch (307b) befestigt wird,
- einem fünften Bereitstellungsschritt, in dessen Verlauf der stromaufwärtige Flansch (307a) bereitgestellt wird, und
- einem vierten Befestigungsschritt, in dessen Verlauf der stromaufwärtige Flansch (307a) an der Primärwand (302) und an der Innenhaut (305) befestigt wird.

7. Turbotriebwerk, das ein primäres Ausstoßrohr (202) aufweist, das außen durch eine Primärdüse (204) und innen durch eine Innenstruktur (206) nach einem der Ansprüche 1 bis 5 begrenzt wird.

8. Luftfahrzeug (10), das mindestens ein Turbotriebwerk nach dem vorhergehenden Anspruch aufweist.

## Claims

1. Internal structure (206) for a primary detection duct (202) of a turbomachine, said internal structure (206) comprising:
- a primary wall (302) consisting of a surface of revolution about a longitudinal axis X, that allows the air to pass through orifices (304) and that forms an internal surface of primary injection duct (202),
- an inner skin (305) consisting of a surface of revolution about the longitudinal axis X, arranged inside the primary wall (302),
- an upstream flange (307a) and a downstream flange (307b) that secure the inner skin (305) to the inside of the primary wall (302),
- at least one separator (52) that is secured to the inner skin (305) and that extends from the inner skin (305) towards the primary wall (302), the or each separator (52) extends in a plane generally parallel to the longitudinal axis X, between the two flanges (307a-b), and the or each separator (52) is not secured to the primary wall (302),
the internal structure (206) being **characterized in that** the or each separator (52) comprises a base (502) secured to the inner skin (305), and at least one tab (506) that is as one with the base (502) and extends between the inner skin (305) and the primary wall (302), and **in that** the or each separator (52) is made of a flexible material so as to permit articulation at the junction between the base (502) and the or each tab (506).

2. Internal structure (206) according to Claim 1, **characterized in that** the length of the or each separator (52) is reduced compared to the distance between the primary wall (302) and the internal skin (305).

3. Internal structure (206) according to Claim 1, **characterized in that** the free end of each separator (52) is in contact against the primary wall (302).

4. Internal structure (206) according to one of Claims 1 to 3, **characterized in that** there are at least two tabs (506), **in that** two consecutive tabs (506) are separated from one another by a slot (508), and **in that** the internal structure (206) comprises an obturator that comprises a pedestal which is secured to the base (502) and tabs that are as one with the pedestal and are offset parallel to the longitudinal axis X relative to the tabs (506) of the separator (52) and that press flat against the tabs (506) of the separator (52).

5. Internal structure (206) according to one of Claims 1 to 4, **characterized in that** the free end of each tab (506) has a curved portion (510).

6. Method for assembling an internal structure (206) according to Claim 1, whereas said assembly method consists of:
- a first provision step during which the primary wall (302) is provided,
- a second provision step during which the downstream flange (307b) is provided,
- a first securing step during which the downstream flange (307b) is secured to the primary wall (302),
- a third provision step during which the inner skin (305) is provided,
- a fourth provision step during which at least one separator (52) is provided,
- for each separator (52), a second securing step during which each separator (52) is secured to the inner skin (305),
- a stressing step during which each tab (506) of each separator (52) is elastically deformed in such a way that the distance between the centre of the inner skin (305) and the free end of each tab (506) is smaller than the radius of the primary wall (302),
- an introduction step during which the inner skin (305) and the deformed tabs (506) are introduced into the primary wall (302),
- a releasing step during which each tab (506) is released so as to return to its original shape and in such a way that the free end of each tab (506) comes to be positioned close to the primary wall (302),
- a third securing step during which the inner skin (305) is secured to the downstream flange (307b),
- a fifth provision step during which the upstream flange (307a) is provided, and
- a fourth securing step during which the upstream flange (307a) is secured to the primary wall (302) and to the inner skin (305).

7. Turbomachine comprising a primary injection duct (202) outwardly delimited by a primary nozzle (204) and inwardly delimited by an internal structure (206) according to one of Claims 1 to 5.

8. Aircraft (10) comprising at least one turbomachine according to the preceding claim.
